# EUROPEAN PATENT APPLICATION

(11) **EP 1 977 737 A1**
(43) Date of publication of application: **08.10.2008**
(21) Application number: 07251520.8
(22) Date of filing: 05.04.2007
(51) Int. Cl.: A61K 9/20, G01G 13/02, G01N 11/04

(54) **Flow assessment apparatus and method for quantitatively assessing the flow properties of particulate material**

(71) Applicant: Wyeth, Madison, NJ 07940 (US)
(72) Inventor: Thakur, Arun A., c/o Wyeth Research, Gosport, PO13 0AU (GB)
(74) Representative: Talbott, Dawn Jacqueline

(57) **Abstract**

A flow assessment apparatus 10 is provided for quantitatively assessing the flow properties of particulate material, such as pharmaceutical formulations and constituent powders. The apparatus 10 includes a vibratory feed device 12 having an inclined dispensing member 16. Particulate material is induced to flow along the inclined member 16 onto a watch glass 18 positioned on a top pan balance 20. The mass of material dispensed onto the watch glass 18 is recorded over a given time period, for example a set time period of 1 minute, or a visually assessed time period where it is deemed that sufficient material has been dispensed. The mass and time data is used to calculate a value representative of a relative flow property of the material, which can be used in the development of pharmaceutical formulations.

## Description

The present invention relates to a flow apparatus, more particularly, but not exclusively, to a flow apparatus and method for quantifying the flow characteristics of fine particulate materials such as pharmaceutical powders.

The pharmaceutical industry uses a range of fine particulate material, such as powders, for the manufacture of medicaments and other chemical compositions. For example, solid oral dosage medicaments such as tablets and capsules are prepared using powder form active pharmaceutical ingredients (API's) and inert powders known as excipients, which dilute or act as a vehicle for the API's.

In developing a solid dosage medicament it is important to obtain formulation, containing the API, having good flow characteristics. If a formulation flows well, the fill weights for capsules or the weights of tablets can be controlled, so as to control the active medicament dosage.

It is easy to visually differentiate between household or generally common materials that have good flow properties, such as table salt and sand, and those that have poor flow properties, such as flour and talc. Furthermore, pharmaceutical formulators know from experience the excipients like mannitol and Avicel, for example, have very good flow properties, and that Ac-Di-Sol and sodium lauryl sulphate (SLS) do not have good flow properties.

In most cases, API's have poor flow characteristics, which typically has a negative effect on the overall flow properties of pharmaceutical formulations containing the API's. It will be understood that this reduces dosage controllability, as well as the homogeneity and recovery from the formulation matrix.

Therefore, in the production of tablets and capsules, it is often necessary to carry out a process of development of a particular formulation, by the addition of excipients, to improve flow and homogeneity of the API matrix. However, this is very much a process of trial and error, based on a visual assessment of the flow of the matrix, which reduces repeatability and productivity.

Hence, there is a need for an apparatus and method which enables the flow properties of a particular matrix, for example pharmaceutical formulations containing excipients and API's, to be quantitatively assessed.

It is an object of the invention to provide an apparatus and/or method which addresses the needs identified above.

According to the invention, there is provided a method for quantitatively assessing the flow properties of a particulate material, the method comprising the steps of subjecting a bulk mass of particulate material to vibration, inducing flow of the particulate material in response to said vibration, and recording the mass of the material flowing beyond a threshold position during a given time period of vibration.

According to a further aspect of the invention, there is provided an apparatus for carrying out the method of the invention, the apparatus including weighing means, an inclined member arranged for dispensing particulate material onto the weighing means, and vibration means for selectively inducing flow of the particulate material along the inclined member.

The invention affords a quantitative assessment of individual formulation ingredients, as well as a quantitative assessment of flow properties during the various stages of the development of a pharmaceutical formulation. This is of particular advantage in improving formulation homogeneity and repeatability, as well as improving productivity rates.

Furthermore, current alternatives to measure flow properties require large amounts of matrix material for assessing the flow of the material, for example between 50g to 100g. As will be apparent from the following description, the invention is advantageous in that it can enable the flow properties of certain materials to be accurately assessed using less material than known techniques.

The preferred method and apparatus of the invention is particularly advantageous in that it has the ability to demonstrate improvements in flow properties of particulate formulation by a quantitative gravimetric measurement.

Other preferred features of the invention will be readily apparent from the claims and the following description, which is included, by way of example only, with reference to the accompanying drawings in which:
Figure 1 is a schematic view of an apparatus in accordance with a preferred embodiment of the invention; and
Figure 2 shows a Table of Values recorded using the apparatus of Figure 1.

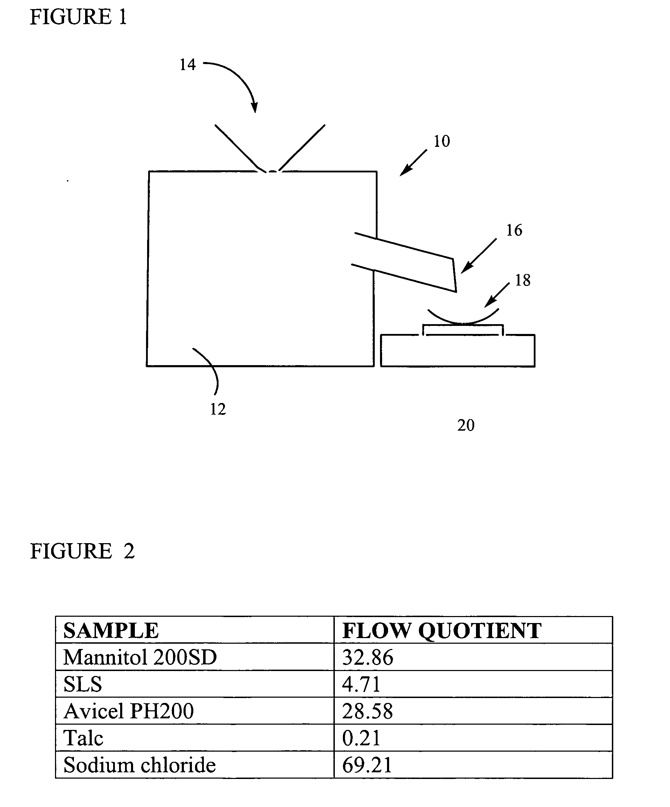

Referring to the Figure 1, an apparatus for assessing the flow properties of particulate material is indicated generally at 10. The apparatus 10 includes a vibratory feed device 12 having a hopper portion or inlet 14 for receiving particulate material. An inclined feed portion or chute 16 is arranged in communication with the hopper 14, for dispensing particulate material from the feed device 12, in use. The feed device 12 also includes a vibration generator (not illustrated), for vibrating particulate material within the device 12, in particular for vibrating the chute 16, and means for selectively activating or deactivating the generator.

The apparatus 10 further includes weighing means in the form of a watch glass 18 positioned on a top pan balance 20. The watch glass 18 is arranged beneath the dispensing end of the chute 16, for receiving material as it is dispensed by the feed device 12. The dispensing end of the chute 16 therefore serves as a threshold position, wherein the mass of material passing beyond the threshold position is measured to assess the flow properties of the material.

A method of operation of the apparatus 10 will now be described with reference to the following example, in which the apparatus 10 was used to individually assess the flow properties of a variety of commonly used pharmaceutical excipients.

In each case, a test sample of excipient was poured into the feed device 12, via the inlet 14. In accordance with a preferred aspect of the invention, the vibration generator was activated for a short initial period at a predetermined vibration setting, to cause material in the device 12 to move onto the chute 16. The initial period of vibration was continued until the material was induced to flow along the chute 16 and onto the watch glass 18. As soon as steady state flow of the material on the chute was established, the vibration generator was deactivated and the balance 20 set to zero, so as to disregard the mass of material dispensed during the initial period of vibration from the following assessment.

With the balance set to zero, the generator was the re-activated so that the material was further induced to flow along the chute 16 and onto the watch glass 18 under vibration. After a predetermined time period of 1 minute the vibration was deactivated and the mass of solid sample dispensed onto the watch glass 18 was recorded.

Thereafter, the balance was reset to zero and a further value recorded for the mass of material dispensed onto the watch glass 18 during a 1 minute period of vibration at the same vibration setting. This was then repeated a further eight times, so that a total of 10 values were recorded for each excipient.

A mean value of mass recorded during the set time period, referred hereinafter as the *flow quotient,* was calculated for each excipient, as shown in the table of Figure 2. The flow quotient is indicative of the flowability of the sample.

As can be seen, the rank order of decreasing flow quotient for the above example is as follows: Sodium chloride, mannitol 200SD, Avicel PH200, SLS, Ac-Di-Sol, talc. This compares exactly with what would be expected from a visual comparison of the listed excipients, i.e. with talc exhibiting poorer flow characteristics than Ac-Di-Sol, for example. However, the recorded values provide a means for quantitatively comparing the flow of the various particulate materials. This enables a user to quantitatively appreciate, e.g. as a percentage, the difference in the flowability of mannitol 200SD compared with Avicel, for example.

The method and apparatus in accordance with the invention provides a quantitative measure of the flow properties for solid samples. Hence, the method and apparatus can be used to quantitatively assess the flow properties of a particular formulation of API's and excipients. The invention thereby provides a valuable aid for formulation development techniques, whereby quantitative values recorded for various potential formulation ingredients can be used as a means for quickly and reliably selecting an excipient that will be most suitable for adding to a given API formulation, in order to achieve a desired flowability.

In a preferred embodiment of the invention, not illustrated, the apparatus is in the form of a single unit, wherein the vibratory feeder and sample weighing means are incorporated into the same housing. Solid samples can be dispensed from the feed portion directly onto the weighing means, or onto a watch glass or other suitable receptacle placed on the weighing means, substantially in the manner described above. A timer can also be incorporated into the housing.

The apparatus can include a microprocessor or other means for processing the data recorded using the apparatus. Additionally or alternatively, the housing can be connected to a computer for processing flow data recorded using the apparatus.

The apparatus may be adapted to provide recordal of the instantaneous mass dispensed onto the balance. For example, the apparatus can be provided with a button which can be depressed during a period of steady flow to start the mass recordal, and then depressed a second time to instantaneously end the mass recordal. In this case, the apparatus can be adapted to automatically record the time period between the button being depressed. This obviates the need for a fixed time period of flow. Rather, the user is able to visually assess when the time period of flow has been sufficient for a meaningful mass to have been deposited on the balance, in order to selectively end the period of recordal. Further, the apparatus preferably includes means for providing an automatic integration of the recorded time and mass data and a visual display or read out means, to enable a user to readily assess the integrated data.

The preferred embodiment provides a user-friendly, integrated and portable flow assessment instrument, which lends itself to laboratory use, and is of particular use, and is of particular advantage for pharmaceutical applications.

## Claims

1. A method for quantitatively assessing the flow properties of a particulate material, the method comprising the steps of subjecting a bulk mass of particulate material to vibration, including flow of the particulate material in response to said vibration, and recording the mass of the material flowing beyond a threshold position during a given time period of vibration.

2. A method according to claim 1, wherein the material is induced to flow under gravity during said period of vibration.

3. A method according to claim 1 or 2, wherein the material is induced to flow along an inclined member.

4. A method according to claim 3, wherein the threshold position is defined by the inclined member.

5. A method according to claim 3 or 4, wherein the inclined member includes a dispensing end, from which the material is dispensed during said period of vibration.

6. A method according to any of claims 1 to 5, wherein the particulate material is dispensed onto weighing means after passing the threshold position.

7. A method according to any preceding claim, wherein the bulk mass is placed in a vibratory feed device configured for selectively vibrating the mass.

8. A method according to any preceding claim, including the preceding steps of vibrating the material for a short initial period until steady flow has been induced in the material.

9. A method according to any preceding claim, wherein the mass of material passing beyond the threshold position during the initial period of vibration is disregarded from the quantitative assessment of the flow properties of the particulate material.

10. An apparatus for carrying out the method of claims 1 to 9, the apparatus including weighing means, an inclined member arranged for dispensing particulate material onto the weighing means, and vibration means for selectively inducing flow of the particulate material along the inclined member.

11. An apparatus according to claim 10, the apparatus comprising an integrated unit.

12. An apparatus according to claim 10 or claim 11, wherein the apparatus is adapted to provide recordal of instantaneous mass dispensed onto the weighing means.

13. An apparatus according to any of claims 10 to 12, wherein the apparatus is adapted to record mass and time data and to provide an automatic integration thereof.

14. A method substantially as herein described with reference to the accompanying drawings.

15. An apparatus substantially as herein described with reference to the accompanying drawings.
